Europäisches Patentamt

European Patent Office

Office européen des brevets

(19)

(11) Veröffentlichungsnummer: **0 078 010
B1**

# (12) EUROPÄISCHE PATENTSCHRIFT

(45) Veröffentlichungstag der Patentschrift:
07.01.87

(21) Anmeldenummer: 82109677.3

(22) Anmeldetag: 20.10.82

(51) Int. Cl.⁴: **C 04 B 35/58,** C 04 B 35/56,
C 04 B 35/64

(54) **Praktisch porenfreie Formkörper aus polykristallinem Siliciumnitrid und Siliciumcarbid und Verfahren zu ihrer Herstellung durch isostatisches Heisspressen.**

(30) Priorität: 23.10.81 DE 3142058

(43) Veröffentlichungstag der Anmeldung:
04.05.83 Patentblatt 83/18

(45) Bekanntmachung des Hinweises auf die Patenterteilung:
07.01.87 Patentblatt 87/2

(84) Benannte Vertragsstaaten:
AT BE CH DE FR GB IT LI NL SE

(56) Entgegenhaltungen:
EP - A - 0 071 241
DE - A - 2 412 339
FR - A - 2 290 407
FR - A - 2 327 836
FR - A - 2 376 089
US - A - 3 968 194

AMERICAN CERAMIC SOCIETY BULLETIN, Band 60, Nr. 11, November 1981, Seiten 1225-1228, Columbus, Ohio, US; T. YAMADA et al.: "Fabrication of Si3N4 by hot isostatic pressing"

(73) Patentinhaber: **Elektroschmelzwerk Kempten GmbH,
Herzog-Wilhelm-Strasse 16, D-8000 München 22 (DE)**

(72) Erfinder: **Hunold, Klaus, Dr., Dipl.-Ing., Hirschdorfer
Weg 3, D-8960 Kempten (DE)**
Erfinder: **Lipp, Alfred, Dr., Dipl.-Chem.,
Bürgermeister-Singer-Strasse 15, D-8939 Bad
Wörishofen (DE)**
Erfinder: **Reinmuth, Klaus, Dr., Dipl.-Chem., An der
Halde 21, D-8968 Durach (DE)**

## Beschreibung

Formkörper sowohl aus polykristallinem Siliciumnitrid als auch aus polykristallinem Siliciumcarbid sind bekannt. Beide Materialien haben wertvolle, jedoch unterschiedliche Eigenschaften, die für den Einsatz als Werkstoffe im Hochtemperaturmaschinenbau, insbesondere für Heissgasturbinen von Bedeutung sind. So zeichnet sich beispielsweise Siliciumcarbid durch eine höhere Wärmeleitfähigkeit und bessere Oxidationsbeständigkeit aus, während Siliciumnitrid eine höhere Raumtemperaturfestigkeit, höhere Bruchzähigkeit, geringere thermische Ausdehnung und einen besseren Elastizitätsmodul aufweist.

Für die Herstellung der Formkörper aus den genannten Materialien sind üblicherweise Sinterhilfsmittel erforderlich, da weder Siliciumnitrid-, noch Siliciumcarbidpulver aufgrund ihrer bekannten Sinterträgheit ohne Mitverwendung von sinterfördernden Zusätzen unter den Bedingungen des konventionellen Heisspress- oder Drucksinterverfahrens hochverdichtet werden können. Hohe Dichte allein ist indessen kein ausschlaggebendes Kriterium für hervorragende Eigenschaften, insbesondere für die Hochtemperaturfestigkeit der betreffenden Körper, worunter zu verstehen ist, dass eine hohe mechanische Festigkeit bei Raumtemperatur, zu deren Charakterisierung die Biegebruchfestigkeit herangezogen werden kann, auch bei hohen Temperaturen, das heisst bis zu mindestens 1400 °C praktisch unverändert erhalten bleiben oder nur einen geringen Abfall zeigen sollte.

Von der Überlegung ausgehend, dass eine Kombination der Eigenschaften von Siliciumnitrid und Siliciumcarbid vorteilhaft wäre, sind bereits Mischwerkstoffe bekannt geworden, die durch einfaches Heisspressen von pulverförmigen Siliciumnitrid zusammen mit weniger als 40 Vol.-% pulverförmigem Siliciumcarbid und Magnesiumoxid als Sinterhilfsmittel bei 1750 °C unter einem Stempeldruck von knapp 30 MPa (4000 p.s.i.) hergestellt worden sind (vgl. US-A 4 184 882 und US-A 4 187 116). Bei den so erhältlichen Formkörpern sind mit steigendem SiC-Gehalt zwar die Werte für die Biegebruchfestigkeit bei Raumtemperatur niedriger als der Wert für Siliciumnitrid allein, das heisst ohne SiC-Zusatz, sie zeigen dafür aber einen geringeren Abfall bei 1400 °C. Obwohl der Abfall von ursprünglich 80% auf ca. 50% gesenkt werden konnte, ist dieser noch immer sehr hoch, sodass derartige Mischwerkstoffe nicht als hochtemperaturfest in bezug auf die mechanische Festigkeit bezeichnet werden können.

Ähnliche Ergebnisse sind auch von Mischwerkstoffen auf Basis $Si_3N_4$ / SiC bekannt, die durch konventionelles Heisspressen mit Magnesiumcarbonat als Sinterhilfsmittel unter einem Stempeldruck von etwa 14 MPa bei Temperaturen bis zu 1775 °C hergestellt worden sind, die alle einen Abfall der Biegebruchfestigkeit von mehr als 45% zeigen (vgl. DE-A 2 412 339).

Eine weitere Verbesserung der Eigenschaften von Mischwerkstoffen auf Basis Siliciumnitrid und Siliciumcarbid ist auf dem angegebenen Wege des konventionellen Heisspressens offensichtlich nicht möglich, weil durch die unbedingt erforderliche Mitverwendung von Sinterhilfsmitteln die Bildung von Sekundärphasen an den Korngrenzen des zu verdichtenden Pulvergemisches gefördert wird, die bereits in geringen Konzentrationen die genannten Eigenschaften störend beeinflussen können.

Für die Herstellung von Formkörpern aus Siliciumnitrid allein ist inzwischen ein Verfahren bekannt geworden, das praktisch ohne die Mitverwendung von Sinterhilfsmitteln durchführbar ist (vgl. DE-A 2 548 740, die der GB-A 1 522 705 entspricht). Hierbei werden Siliciumnitridpulver mit höchstens 0,6 Gew.-% Verunreinigungen in Form von fremden Metalloxiden, oder aus diesen vorgeformte Körper in Kapseln aus Glas mit hohem Erweichungspunkt eingeschlossen und im Hochdruckautoklaven unter Verwendung eines Gases als Druckmittel bei Temperaturen von 1600 °C bis 1900 °C unter einem Druck von 150 bis 1500 MPa isostatisch heissgepresst. Die so erhältlichen Formkörper von nahezu theoretischer Dichte haben eine Biegebruchfestigkeit von ca. 600 N/mm² bei Raumtemperatur, die bei 1370 °C einen Abfall von ca. 45% zeigt (vgl. H. Larker et al in SAE (Tech. Pap.) 1977, 770 335; referiert in Chemical Abstracts, Vol. 87 (1977) 171 828 b).

Das unter Einsatz von handelsüblichem $Si_3N_4$-Pulver mit einem Gesamtgehalt an metallischen Verunreinigungen in der Grössenordnung von 0,6 Gew.-% erzeugte Material hatte zwar eine hohe Dichte, was zweifellos auf den hohen Gehalt von fremden Metalloxiden im $Si_3N_4$-Ausgangspulver zurückzuführen ist, die in gleicher Weise wie ein Sinterhilfsmittelzusatz die Verdichtung fördern, aber auch die Bildung von Sekundär-Phasen an den Korngrenzen, die für den Festigkeitsabfall bei höherer Temperatur verantwortlich sind.

Es stellt sich somit die Aufgabe, praktisch porenfreie Formkörper aus Mischwerkstoffen auf Basis Siliciumnitrid und Siliciumcarbid zur Verfügung zu stellen, die durch Verdichten von reinem $Si_3N_4$- und SiC-Pulver in jedem beliebigen Mengenverhältnis ohne Mitverwendung von Sinterhilfsmitteln hergestellt werden können, wodurch die Auswahl der Eigenschaften gezielt gesteuert und jedem Verwendungszweck angepasst werden kann.

Die erfindungsgemässen, praktisch porenfreien Formkörper mit einer Dichte von mindestens 98%, bezogen auf den theoretischen Wert des Gemisches aus $Si_3N_4$ + SiC, bestehen aus polykristallinem Siliciumnitrid und Siliciumcarbid in Form eines homogenen Mikrogefüges mit Korngrössen von maximal 10 µm, die aus Gemischen von reinem $Si_3N_4$- und SiC-Pulver im Gewichtsverhältnis von 5 bis 95:95 bis 5 mit einem Gesamtgehalt an metallischen Verunreinigungen von höchstens 0,2 Gew.-%, bezogen auf das Gesamtgewicht des Pulvergemisches, durch isostatisches Heisspressen in einer vakuumdicht geschlossenen Hülle bei einer Temperatur von 1800 °C bis 2200 °C und einem Druck von 100 bis 400 MPa im Hochdruckautoklaven unter Verwendung eines inerten Gases als Druckübertragungsmedium hergestellt worden sind.

In den für die Herstellung der erfindungsgemässen Formkörper verwendeten Pulvergemischen liegen $Si_3N_4$ und SiC in homogener Verteilung vor, wobei das Gewichtsverhältnis in weitem Bereich variiert werden kann, das vorzugsweise im Bereich von 10–90:90–10 liegt.

Als Ausgangsmaterialien können Siliciumnitrid- und Siliciumcarbidpulver beliebiger Herkunft einschliesslich aller bekannten Modifikationen, wie α- und β-$Si_3N_4$ und α- und β-SiC, einzeln oder im Gemisch, verwendet werden, die durch übliche bekannte Massnahmen vermischt worden sind.

Für die Herstellung der erfindungsgemässen Formkörper werden vorteilhaft feine Pulvergemische mit Teilchengrössen von 10 μm und feiner, vorzugsweise von 5 μm und feiner, eingesetzt, in welchem die Summe des $Si_3N_4$- + SiC-Gehalts mindestens 97,0 Gewichtsprozent beträgt. Der Gesamtgehalt an metallischen Verunreinigungen in diesen Pulvergemischen beträgt definitionsgemäss nicht mehr als 0,2 Gew.-%. Hierunter sind alle metallischen Elemente zu verstehen, mit Ausnahme des in gebundener Form vorliegenden Siliciums. Der noch verbleibende Differenzbetrag bis zu 100 Gew.-% verteilt sich vorwiegend auf Sauerstoff in Form von anhaftendem $SiO_2$, sowie auf anhaftenden Kohlenstoff und Stickstoff.

Von der Herstellung her in handelsüblichen $Si_3N_4$- und SiC-Pulvern vorhandener anhaftender Kohlenstoff + Stickstoff können insgesamt bis zu höchstens 1,0 Gew.-% toleriert werden. Das aufgrund der bekannten Oxidationsneigung von $Si_3N_4$ und SiC beim Mahlvorgang gebildete, anhaftende $SiO_2$, das zwar durch eine anschliessende Flusssäurebehandlung entfernt werden kann, wobei jedoch ein Restgehalt verbleibt, der um so grösser ist, je feiner das Pulver ist, kann bis zu höchstens 1,8 Gew.-% toleriert werden.

Für die Herstellung der erfindungsgemässen Formkörper kann das Pulvergemisch aus Siliciumnitrid und Siliciumcarbid per se ohne weitere Vorbehandlung in vorgefertigte Hüllen oder Kapseln von beliebiger Form eingefüllt und durch Vibration verdichtet werden. Anschliessend werden die Hüllen samt Inhalt evakuiert und dann gasdicht verschlossen.

Das Pulvergemisch aus Siliciumnitrid und Siliciumcarbid kann jedoch auch zu Körpern mit offener Porosität, das heisst mit zur Oberfläche offenen Poren vorgeformt und dann mit einer gasdichten Hülle versehen werden. Für die Formgebung kann das Pulvergemisch zusammen mit einem temporären Bindemittel vermischt oder in einer Lösung des temporären Bindemittels in einem organischen Lösungsmittel dispergiert werden. Als organische Lösungsmittel können beispielsweise Aceton oder niedere aliphatische Alkohole mit 1 bis 6 C-Atomen verwendet werden. Beispiele für temporäre Bindemittel sind Polyvinylalkohole, Stearinsäure, Polyethylenglykol und Campher, die in Mengen bis zu etwa 5 Gew.-%, bezogen auf das Gewicht des Pulvergemisches verwendet werden können. Die Mitverwendung des temporären Bindemittels ist jedoch nicht unbedingt erforderlich. So können beispielsweise sehr feine Pulvergemische auch mit dem organischen Lösungsmittel angefeuchtet werden, wobei sich Isopropylalkohol besonders bewährt hat. Die Formgebung kann durch übliche bekannte Massnahmen, beispielsweise durch Gesenkpressen, isostatisches Pressen, Spritzgiessen, Strangpressen oder Schlickergiessen bei Raumtemperatur oder bei erhöhter Temperatur vorgenommen werden. Nach der Formgebung sollten die Grünkörper eine theoretische Dichte von mindestens 50%, vorzugsweise 60%, bezogen auf den theoretischen Wert des Gemisches aus $Si_3N_4$ + SiC aufweisen. Anschliessend werden die Grünkörper vorteilhaft einer thermischen Behandlung durch Erhitzen auf 300° bis 1200 °C unterzogen, bevor sie mit der gasdichten Hülle versehen werden, um sicher zu stellen, dass bei der heissisostatischen Verdichtung keine gasförmigen Zersetzungsprodukte aus den Bindemitteln den Verdichtungsvorgang stören oder die Hülle beschädigen.

Als Material für die gasdicht verschliessbaren Hüllen, das bei der für das Pulvergemisch aus Siliciumnitrid und Siliciumcarbid erforderlichen Verdichtungstemperatur von 1800 °C bis 2200 °C plastisch verformbar sein muss, können hochschmelzende Metalle, wie Wolfram, Molybdän oder Tantal, Metallegierungen, intermetallische Verbindungen, wie Molybdän- oder Wolfram-Silicid, hochschmelzende Gläser, wie reines Kieselglas oder hochschmelzende Keramikarten verwendet werden. Bei Einsatz des Pulvergemisches per se sind vorgefertigte Hüllen oder Kapseln erforderlich, die auch bei Einsatz der vorgeformten Körper Verwendung finden können. Bei vorgeformten Körpern kann die gasdichte Hülle jedoch auch durch direkte Beschichtung erzeugt werden, beispielsweise durch stromlose Nassabscheidung einer Metallschicht oder durch Auftragen einer glas- oder keramikartigen Masse, die anschliessend unter Bildung der gasdichten Hülle geschmolzen oder gesintert wird.

Die gehüllten Proben werden vorteilhaft in Graphitbehältern in den Hochdruckautoklaven eingebracht und auf die erforderliche Verdichtungstemperatur von mindestens 1800 °C erhitzt. Hierbei ist es vorteilhaft, Druck und Temperatur getrennt zu regeln, das heisst den Gasdruck erst dann zu erhöhen, wenn das Hüllmaterial anfängt, sich unter dem Druck plastisch zu verformen. Als inerte Gase für die Druckübertragung werden vorzugsweise Argon oder Stickstoff verwendet. Der angewendete Druck liegt vorzugsweise im Bereich von 150 bis 250 MPa, der unter langsamer Erhöhung bei der jeweils angewendeten Endtemperatur erreicht wird, die vorzugsweise im Bereich von 1850° bis 2050 °C liegt. Die jeweils optimale Temperatur ist abhängig sowohl von der Feinheit und der Reinheit des verwendeten Pulvergemisches, als auch von dem Gewichtsverhältnis von $Si_3N_4$: SiC im Pulvergemisch, das heisst diese ist um so höher, je grösser der Anteil an SiC im Pulvergemisch ist. Die optimale Temperatur sollte jedoch nicht überschritten werden, weil sonst die Gefahr besteht, dass die gebildeten praktisch porenfreien Formkörper ein sogenanntes «sekundärrekristallisiertes Gefüge» aufweisen, das nicht mehr homogen ist, weil einige der Körner stärker als die übrigen gewachsen sind.

Nach Erniedrigung von Druck und Temperatur werden die abgekühlten Körper aus dem Hochdruckautoklaven entnommen und von den Hüllen befreit, beispielsweise durch Abdrehen der Metallhüllen, durch Sandstrahlbehandlung der Glas- oder Keramikhüllen oder durch chemisches Abtragen.

Die so hergestellten Formkörper sind nicht nur praktisch porenfrei mit einer Dichte von mindestens 98%, bezogen auf den theoretischen Wert des Gemisches aus $Si_3N_4$ + SiC (theoretische Dichte von $Si_3N_4$ = 3,19 g/cm³, theoretische Dichte von SiC = 3,21 g/cm³), sondern sie sind aufgrund der allseitigen Druckanwendung auch praktisch texturfrei, sodass ihre Eigenschaften nicht mehr richtungsabhängig, sondern in allen Richtungen gleichbleibend sind. Für die zur Charakterisierung der Hochtemperaturfestigkeit herangezogene Biegebruchfestigkeit, die nicht mehr durch sekundäre Phasen an den Korngrenzen aus Sinterhilfsmittelzusätzen störend beeinflusst werden kann, werden Werte von > 600 N/mm² erreicht, die bis zu etwa 1400°C nur einen Abfall von maximal 10% zeigen und zwar unabhängig von dem jeweils angewendeten Gewichtsverhältnis von $Si_3N_4$:SiC. Die erfindungsgemässen Formkörper sind somit auf jeden Fall hochtemperaturfest, während die übrigen Eigenschaften durch die Auswahl des Gewichtsverhältnisses von $Si_3N_4$:SiC gezielt gesteuert werden können. So kann beispielsweise durch Erhöhung des Gewichtsanteils von SiC die Wärmeleitfähigkeit der Mischwerkstoffe erhöht werden, während durch Erhöhung des Gewichtsanteils von $Si_3N_4$ die elastischen Eigenschaften der Mischwerkstoffe verbessert werden können.

Die erfindungsgemässen Formkörper aus Mischwerkstoffen auf Basis $Si_3N_4$ und SiC haben demnach nicht nur bessere Eigenschaften als solche, die unter Mitverwendung von Sinterhilfsmitteln hergestellt worden sind, sondern sie können auch auf einfachere Weise hergestellt werden, da die eingeschränkte Formgebungsmöglichkeit beim üblichen Heisspressen entfällt. Hochdruckautoklaven können einen grossen Ofenraum haben, in dem zahlreiche gehüllte Proben von beliebiger Gestalt und Grösse gleichzeitig heissisostatisch verdichtet werden können.

Obwohl es bekannt ist, dass mit Hilfe des isostatischen Heisspressverfahrens Körper aus Siliciumnitridpulver allein mit einem relativ hohen Anteil an fremden Metalloxiden als Verunreinigungen praktisch ohne die Mitverwendung von Sinterhilfsmitteln hochverdichtet werden können, muss es als überraschend bewertet werden, dass dies im Falle des reinen Pulvergemisches aus Siliciumnitrid und Siliciumcarbid gelingt. Durch eigene Untersuchungen wurde nämlich nachgewiesen, dass für die hohe Verdichtung von Siliciumcarbid allein unter den Bedingungen des isostatischen Heisspressverfahrens und zwar sowohl mit, als auch ohne Sinterhilfsmittel Temperaturen von mindestens 1900°C benötigt werden. Da sich bekanntlich Siliciumnitrid bereits unterhalb von 1800°C bei Normaldruck unter Bildung von Silicium und Stickstoff zersetzt, war daher nicht auszuschliessen, dass der Verdichtungsvorgang insbesondere bei Pulvergemischen mit hohem SiC-Anteil von 50 Gew.-% und mehr, für die Temperaturen von 1900° bis 2000°C erforderlich sind, durch Zersetzungsprodukte aus dem Siliciumnitrid gestört wird.

Es ist zwar ebenfalls bekannt, dass durch Erhöhung des Stickstoffgasdrucks, der in direktem Kontakt mit der Oberfläche eines zu verdichtenden Körpers aus $Si_3N_4$ und darin enthaltener Berylliumverbindungen als Sinterhilfsmittel steht, das Zersetzungsgleichgewicht von $Si_3N_4$ in Richtung höherer Temperatur verschoben werden kann. Diese Verhältnisse, bei dem aus der FR-A 2 376 089 bekannten Verfahren sind jedoch nicht ohne weiteres auf den heissisostatischen Verdichtungsprozess übertragbar, bei dem der zu verdichtende Körper in einer evakuierten gasdichten Hülle eingeschlossen ist und der von aussen aufgebrachte Gasdruck über die Hülle auf den zu verdichtenden Körper übertragen und somit nicht in direktem Kontakt mit dessen Oberfläche steht. Ein Stickstoffgasdruck im Inneren der evakuierten Hülle könnte sich nur durch die Zersetzung des $Si_3N_4$ aufbauen, der dann zwar die weitere Zersetzung des $Si_3N_4$ hindern, aber gleichzeitig die endgültige Verdichtung stören würde, weil durch die geschlossene Hülle nichts entweichen kann. Dass sich ein derartiger Druckaufbau offensichtlich nicht in diesem Sinne störend bemerkbar macht, war nicht vorhersehbar.

Die Erfindung wird anhand der folgenden Beispiele näher erläutert. Die hierin angegebene theoretische Dichte in Prozent ist jeweils auf den theoretischen Wert des Gemisches aus $Si_3N_4$ + SiC bezogen.

Als Ausgangsmaterial wurden Pulver folgender Zusammensetzung verwendet:

|  | SiC-Pulver | | $Si_3N_4$-Pulver | |
|  | Typ A Gew.-% | Type B Gew.-% | Typ A Gew.-% | Typ B Gew.-% |
| --- | --- | --- | --- | --- |
| SiC | 98,90 | 98,00 | – | – |
| $Si_3N_4$ | – | – | 98,10 | 97,60 |
| $SiO_2$ | 0,60 | 1,36 | 1,36 | 1,48 |
| $C_{frei}$ | 0,17 | 0,76 | 0,25 | 0,27 |
| $N_{frei}$ | 0,05 | <0,01 | 0,48 | 0,50 |
| F | <0,01 | <0,01 | <0,01 | <0,01 |
| Al | 0,07 | 0,03 | 0,02 | 0,04 |
| Fe | 0,05 | 0,01 | 0,02 | 0,05 |
| Ca | <0,01 | <0,01 | 0,01 | 0,03 |
| B | <0,01 | <0,01 | <0,01 | <0,01 |
| Mg | <0,01 | <0,01 | <0,01 | <0,01 |
| Ni | <0,01 | <0,01 | <0,01 | <0,01 |
| Ti | <0,01 | <0,01 | <0,01 | <0,01 |
| Teilchengrösse in µm | <6 | <2 | <5 | <2 |

**Beispiel 1**

50 g einer Mischung bestehend aus 85 Gew.-% Siliciumcarbidpulver (Typ A) und 15 Gew.-% Siliciumnitridpulver (Typ A) wurden in ca. 50 g Aceton aufgeschlemmt, mit einem schnellaufenden Rührer (Mischzeit 10 min) homogenisiert, abgenutscht und getrocknet. Je 15 g der Pulvermischung wurden auf einem Vibrationstisch in nach oben offenen Molybdänkapseln von 20 mm Durchmesser und 50 mm Höhe eingefüllt.

Anschliessend wurden die Kapseln bei 500 °C im Feinvakuum in einer Elektronenstrahlschweissanlage mit Molybdändeckeln vakuumdicht verschlossen. Insgesamt wurden drei Proben hergestellt. Dann wurden die gehüllten Proben bei 2000 °C unter einem Argongasdruck von 200 MPa (2 kbar) und einer Haltezeit von 2 Std. heissisostatisch verdichtet. Nach dem Abkühlen und Entfernung der Molybdänhüllen durch mechanisches Abtragen wurden aus den drei Formkörpern je vier Biegeproben der Abmessungen 2 × 4 × 34 mm geschnitten und die Biegefestigkeit nach der 4-Punkt-Methode bei einem unteren Auflageabstand von 30 mm und einem oberen Auflageabstand von 15 mm bei Raumtemperatur und bei 1370 °C bestimmt.

Die durchschnittliche Biegefestigkeit (Mittelwert von jeweils 6 Proben) betrug 612 N/mm² bei Raumtemperatur und 587 N/mm² bei 1370 °C bei transkristallinem Bruchmodus.

Die durchschnittliche Dichte aller Proben betrug 3,17 g/cm³, das entspricht 98,8% der theoretischen Dichte.

**Beispiel 2**

150 g einer Mischung bestehend aus 50 Gew.-% Siliciumcarbid (Typ B) und 50 Gew.-% Siliciumnitrid (Typ B) wurden in ca. 200 g Isopropylalkohol aufgeschlemmt, mit einem schnellaufenden Rührer (Mischzeit 10 min) homogenisiert, abgenutscht und getrocknet. Das noch etwas feuchte Pulver (ca. 2 Gew.-% Isopropylalkohol) wurde in PVC-Hülsen unter einem Druck von 400 MPa (4 kbar) kaltisostatisch zu zwei Formkörpern der Abmessungen 30 mm Durchmesser × 50 mm Höhe vorverdichtet und bei 100 °C 2 Std. getrocknet. Die mit einer Graphitfolie umhüllten Presslinge wurden in vorgeformte Kieselglashüllen gegeben, die evakuiert und anschliessend mit einer Knallgasflamme zugeschmolzen wurden. Die gehüllten Proben wurden in einer Graphitschatulle in eine Schüttung aus Kieselglassplit eingebettet und in dieser Anordnung in den Hochdruckautoklaven eingebracht. Dann wurden die gehüllten Proben bei 1900 °C unter einem Argongasdruck von 150 MPa (1,5 kbar) und einer Haltezeit von 3 Std. heissisostatisch verdichtet. Nach dem Abkühlen wurden die Glashüllen durch Sandstrahlen entfernt, aus den Formkörpern je sieben Biegeproben der Abmessungen 2 × 4 × 34 mm geschnitten und die Biegefestigkeit wie in Beispiel 1 beschrieben, bestimmt. Die durchschnittliche Biegefestigkeit (Mittelwert von jeweils 7 Proben) betrug 629 N/mm² bei Raumtemperatur und 581 N/mm² bei 1370 °C. Die Proben brachen transkristallin. Die durchschnittliche Dichte aller Proben betrug 3,17 g/cm³, das entspricht 99% der theoretischen Dichte.

**Beispiel 3**

150 g einer Mischung bestehend aus 90 Gew.-% Siliciumnitrid (Typ A) und 10 Gew.-% Siliciumcarbid (Typ B) wurden mit einem Zusatz von 3 Gew.-% Campher in ca. 100 g Aceton in einem Kneter 3 Std. gemischt und anschliessend bei 60 °C im Trockenschrank getrocknet. Das trockene Pulver wurde wie in Beispiel 2 zu zwei Formkörpern kalt vorverdichtet. Zur Zersetzung des Camphers wurden die Presslinge im Hochvakuum bei 600 °C 1 Std. entgast. Dann wurden die Presslinge mit einer Zwischenschicht aus BN-Pulver wie in Beispiel 2 in Kieselglashüllen eingeschweisst. Die Aussenoberflächen der Glashüllen wurden durch Sandstrahlen aufgerauht und dann mit einer in Wasser aufgeschlämmten SiC-Suspension beschichtet und getrocknet. Anschliessend wurden die gehüllten Proben bei 1850 °C unter einem Argongasdruck von 200 MPa (2 kbar) und einer Haltezeit von 5 Std. heissisostatisch verdichtet. Nach dem Abkühlen wurden die Glashüllen durch Sandstrahlen entfernt, aus den Formkörpern Biegeproben geschnitten und die Biegefestigkeit wie in Beispiel 1 beschrieben, bestimmt.

Die durchschnittliche Biegefestigkeit (Mittelwert von jeweils 7 Proben) betrug 740 N/mm² bei Raumtemperatur und 667 N/mm² bei 1370 °C. Die Proben brachen transkristallin.

Die durchschnittliche Dichte aller Proben betrug 3,19 g/cm³, das entspricht 100% der theoretischen Dichte.

**Patentansprüche**

1. Praktisch porenfreie Formkörper mit einer Dichte von mindestens 98%, bezogen auf den theoretischen Wert des Gemisches aus $Si_3N_4$ + SiC, bestehend aus polykristallinem Siliciumnitrid und Siliciumcarbid in Form eines homogenen Mikrogefüges mit Korngrössen von maximal 10 µm, die aus Gemischen von reinem $Si_3N_4$- und SiC-Pulver im Gewichtsverhältnis von 5 bis 95:95 bis 5 mit einem Gesamtgehalt an metallischen Verunreinigungen von höchstens 0,2 Gew.-%, bezogen auf das Gesamtgewicht des Pulvergemisches, durch isostatisches Heisspressen in einer vakuumdicht geschlossenen Hülle bei einer Temperatur von 1800 °C bis 2200 °C und einem Druck von 100 bis 400 MPa im Hochdruckautoklaven unter Verwendung eines inerten Gases als Druckübertragungsmedium hergestellt worden sind.

2. Formkörper nach Anspruch 1, die unter Verwendung eines Pulvergemisches aus

| | | |
|---|---|---|
| mindestens | 97,0 Gew.-% | $Si_3N_4$ + SiC |
| bis zu | 1,8 Gew.-% | $SiO_2$ |
| bis zu | 1,0 Gew.-% | C + N |
| bis zu | 0,2 Gew.-% | metallischen Verunreinigungen insgesamt, |

mit einer Teilchengrösse von 10 µm und feiner, hergestellt worden sind.

3. Verfahren zur Herstellung der Formkörper nach Anspruch 1 und 2 durch isostatisches Heisspressen im Hochdruckautoklaven unter Verwendung eines inerten Gases als Druckübertragungsmedium, dadurch gekennzeichnet, dass das Pulvergemisch aus Siliciumnitrid und Siliciumcarbid in vorgefertigte Hüllen eingefüllt und durch Vibration verdichtet wird, anschliessend die Hüllen samt Inhalt vakuumdicht verschlossen und die gehüllten Proben im Hochdruckautoklaven auf 1800 °C bis 2200 °C unter langsamer Erhöhung des Gasdruckes auf 100 bis 400 MPa bis zur Bildung der praktisch porenfreien Formkörper erhitzt, nach dem Abkühlen aus dem Hochdruckautoklaven entnommen und von den Hüllen befreit werden.

4. Verfahren zur Herstellung der Formkörper nach Anspruch 1 und 2, durch isostatisches Heisspressen im Hochdruckautoklaven unter Verwendung eines inerten Gases als Druckübertragungsmedium, dadurch gekennzeichnet, dass das Pulvergemisch aus Siliciumnitrid und Siliciumcarbid zusammen mit einem temporären Bindemittel unter Formgebung zu Körpern mit zur Oberfläche offenen Poren vorgeformt und diese vorgeformten Körper mit einer Dichte von mindestens 50%, bezogen auf den theoretischen Wert des Gemisches aus $Si_3N_4$ + SiC, in vorgefertigte Hüllen eingesetzt oder mit einem, eine vakuumdichte Hülle bildenden Material beschichtet werden, die Hüllen vakuumdicht verschlossen und die gehüllten Proben im Hochdruckautoklaven auf 1800 °C bis 2200 °C unter langsamer Erhöhung des Gasdrucks auf 100 bis 400 MPa bis zur Bildung der praktisch porenfreien Formkörper erhitzt, nach dem Abkühlen aus dem Hochdruckautoklaven entnommen und von den Hüllen befreit werden.

**Claims**

1. Substantially pore-free shaped articles having a density of at least 98%, based on the theoretical value of the mixture consisting of $Si_3N_4$ + SiC, and consisting of polycrystalline silicon nitride and polycrystalline silicon carbide in the form of a homogeneous microstructure having grain sizes of not more than 10 µm which are manufactured from mixtures of pure $Si_3N_4$ powder and pure SiC powder in a weight ratio of from 5:95 to 95:5 having a total content of metallic impurities of not more than 0.2% by weight, based on the total weight of the pulverent mixture, by isostatic hot pressing in a vacuum-sealed casing at a temperature of from 1800 to 2200 °C and a pressure of from 100 to 400 MPa in a high-pressure autoclave using an inert gas as pressure-transfer medium.

2. Shaped articles according to claim 1 which have been manufactured using a pulverent mixture consisting of

| at least | 97.0% by weight of $Si_3N_4$+SiC |
| up to | 1.8% by weight of $SiO_2$ |
| up to | 1.0% by weight of C+N |
| up to | 0.2% by weight, in total, of metallic impurities |

and having a particle size of 10 µm and finer.

3. Process for the manufacture of shaped articles according to claims 1 and 2 by isostatic hot pressing in a high-pressure autoclave using an inert gas as pressure-transfer medium, characterised in that the pulverent mixture consisting of silicon nitride and silicon carbide is filled into prefabricated casings and is densified by vibration, subsequently the casings together with their contents are vacuum-sealed and the encased samples are heated in a high-pressure autoclave to from 1800 to 2200 °C with slow increase of the gas pressure to from 100 to 400 MPa until substantially pore-free shaped articles are formed, and, after cooling, they are removed from the high-pressure autoclave and freed from the casings.

4. Process for the manufacture of shaped articles according to claims 1 and 2 by isostatic hot pressing in a high-pressure autoclave using an inert gas as pressure-transfer medium, characterised in that the pulverent mixture consisting of silicon nitride and silicon carbide together with a temporary binder is preshaped into articles having pores open to the surface and those preshaped articles having a density of at least 50%, based on the theoretical value of the mixture consisting of $Si_3N_4$ + SiC, are placed into prefabricated casings, or are coated with a material forming a vacuum-tight casing, the casings are vacuum-sealed and the encased samples are heated in a high-pressure autoclave to from 1800 to 2200 °C with slow increase of the gas pressure to from 100 to 400 MPa until substantially pore-free shaped articles are formed, and, after cooling, they are removed from the high-pressure autoclave and freed from the casings.

**Revendications**

1. Objets moulés pratiquement sans pores, ayant une masse volumique d'au moins 98% par rapport à la valeur théorique du mélange de $Si_3N_4$ + SiC, consistant en du nitrure de silicium et du carbure de silicium polycrystallins sous forme d'une microstructure homogène dont les grosseurs de grains sont d'au maximum 10 µm, que l'on a produits à partir de mélanges de poudres de $Si_3N_4$ et de SiC pures selon un rapport pondéral de 5 à 95:95 à 5 ayant une teneur totale en des impuretés métalliques d'au maximum 0,2% en poids, par rapport au poids total du mélange en poudre, par compression isostatique à chaud dans une enveloppe fermée de manière étanche au vide à une température de 1800 °C à 2200 °C sous une pression de 100 à 400 MPa dans des autoclaves pour haute pression avec utilisation d'un gaz inerte comme milieu de transmission de la pression.

2. Objets moulés selon la revendication 1, qui ont été produits avec utilisation d'un mélange pulvérulent consistant en:

| au moins | 97,0% en poids de $Si_3N_4$+SiC |
| jusqu'à | 1,8 en poids de $SiO_2$ |
| jusqu'à | 1,0% en poids de C+N |
| jusqu'à | 0,2% en poids d'impuretés métalliques, au total, |

ayant une grosseur de particules de 10 µm et moins.

3. Procédé de production d'objets moulés selon la revendication 1 et la revendication 2 par compression isostatique à chaud dans des autoclaves pour pression élevée, avec utilisation d'un gaz inerte comme milieu de transmission de pression, procédé caractérisé en ce qu'on verse le mélange pulvérulent de nitrure de silicium et de carbure de silicium dans des enveloppes préformées et on les compacte par vibrations, puis l'on ferme de manière étanche au vide les enveloppes et leur contenu et l'on chauffe les échantillons ainsi enveloppés dans des autoclaves pour pression élevée jusqu'à 1800 °C à 2200 °C avec une lente élévation de la pression de gaz jusqu'à 100 à 400 MPa, jusqu'à formation des objets moulés pratiquement sans pores, on les retire après leur refroidissement des autoclaves pour pression élevée et on les débarrasse des enveloppes.

4. Procédé pour produire des objets moulés selon la revendication 1 et la revendication 2, par compression isostatique à chaud dans des autoclaves pour pression élevée en utilisant un gaz inerte comme milieu de transmission de pression, procédé caractérisé en ce qu'on soumet le mélange pulvérulent de nitrure de silicium et de carbure de silicium, avec un liant temporaire, à un préformage donnant des objets présentant en surface des pores ouverts et l'on place ces objets préformés, dont la masse volumique représente au moins 50% de la valeur théorique pour le mélange de $Si_3N_4$ + SiC, dans des enveloppes préformées ou bien on les enduits d'une matière formant une enveloppe étanche au vide, on ferme les enveloppes de manière étanche au vide et l'on chauffe les échantillons ainsi enveloppés, dans des autoclaves pour pression élevée, jusqu'à 1800 °C à 2200 °C avec une lente élévation de la pression de gaz jusqu'à 100 à 400 MPa, jusqu'à formation des objets moulés pratiquement sans pores, et, après le refroidissement, on a retiré ces objets des autoclaves pour haute pression et l'on en élimine les enveloppes.